# EUROPÄISCHE PATENTSCHRIFT

(11) **EP 1 897 719 B1**
(45) Veröffentlichungstag und Bekanntmachung des Hinweises auf die Patenterteilung: **22.05.2013**
(21) Anmeldenummer: 07015431.5
(22) Anmeldetag: 07.08.2007
(51) Int. Cl.: B60J 7/12

(54) **Verdeckantrieb**
Drive for soft top
Entraînement de capote

(30) Priorität: 08.09.2006 DE 102006042202
(43) Veröffentlichungstag der Anmeldung: 12.03.2008
(73) Patentinhaber: Dr. Ing. h.c. F. Porsche AG, 70435 Stuttgart (DE)
(72) Erfinder: Schulz, Lars, 15566 Schöneiche (DE); Hermann, Felix, 71229 Leonberg (DE); Beierl, Dominik, 70825 Korntal-Münchingen (DE)

(56) Entgegenhaltungen:
- WO-A2-02/43978
- DE-A1- 10 144 583
- DE-C- 889 270
- DE-C1- 4 438 925
- US-A1- 2003 146 642

## Beschreibung

Die Erfindung betrifft einen Verdeckantrieb für ein von einer Schließposition in eine Ablageposition und umgekehrt überführbares flexibles Fahrzeugdach mit den weiteren Merkmalen des Oberbegriffes des Anspruches 1. Ein solcher Verdeckantrieb ist aus der US 2003/0146642 A1 bekannt.

Ein aus DE 44 38 925 bekanntes flexibles Fahrzeugdach weist eine Mehrzahl von Dachlenkern auf, wobei ein Dachlenker über einen Linearantrieb bewegbar ist. Der Dachlenker und ein Festende des Linearantriebes sind an einem Verdeckhauptlager befestigt.

Aus DE 88 92 70 ist ebenfalls ein Faltverdeck für Kraftfahrzeuge bekannt, bei dem ein bewegbarer Dachlenker über einen Zylinder mit Kolbenstange geöffnet und geschlossen werden kann. Diese bekannte Vorrichtung ist relativ kompliziert und weist eine Mehrzahl von weit über den Bereich eines Verdeckhauptlagers hinausstehende Antriebselemente für das flexible Dach auf.

Der Erfindung liegt die Aufgabe zugrunde, einen Verdeckantrieb mit den Merkmalen des Oberbegriffes des Anspruches 1 derart auszubilden, dass die Elemente des Verdeckantriebes mit dem Verdeckhauptlager und weiteren daran angelenkten Elementen, insbesondere Dachlenkern eine kompakte, zusammenhängend montierbare Einheit bildet, wobei die Verdeckantriebsteile in ihrer räumlichen Ausdehnung im wesentlichen auf die Ausdehnung des Verdeckhauptlagers beschränkt sind. Diese Aufgabe wird dadurch gelöst, dass ein Stellende des Linearantriebes schwenkbar an einem am Verdeckhauptlager befestigten Umschlaghebel befestigt ist, an dessen freien Ende eine Antriebskoppel vorgesehen ist, die mit einem ersten Ende gelenkig mit dem freien Ende des Umschlaghebels und mit einem zweiten Ende gelenkig mit einem vom Drehpunkt am Verdeckhauptlager beabstandeten Abschnitt des Dachlenkers befestigt ist, wodurch eine Antriebsbewegung des Linearantriebes auf den Dachlenker übertragen werden kann. Als Kern der Erfindung wird gleichsam eine in den Bereich des Verdeckhauptlagers integrierte und daran befestigte Antriebskraftübertragungskette angesehen, die aus dem Linearantrieb, der Antriebskoppel und dem Umschlaghebel besteht. Diese Teile bewegen sich im Bereich des Verdeckhauptlagers, so dass der Verdeckantrieb insgesamt platzsparend ausgebildet ist. Auch hinsichtlich der Verdeckmontage und insbesondere der Montage der Antriebsteile wird mit Vorteil erreicht, dass das Verdeck oder zumindest Teile davon vormontiert in eine Fahrzeugkarosserie eingesetzt werden können, wozu nur wenige Schrauben erforderlich sind, die das Verdecklager an der Fahrzeugkarosserie haltern. Eine gesonderte Abstützung des Linearantriebes, insbesondere eines Antriebszylinders ist nicht erforderlich. Die Krafteinleitung des Linearantriebes in die Mitglieder der Antriebskette zwischen Linearantrieb und Dachlenker erfolgt zunächst in einer vom Dachlenker weggerichteten Richtung zu einem Umschlaghebel, der innerhalb des Verdeckhauptlagers verschwenkbar ist. An dessen freien Schwenkende befindet sich die Antriebskoppel, die die Schwenkbewegung des Umschlaghebels auf den Dachlenker überträgt, der am Verdeckhauptlager befestigt ist. Mit nur wenigen Antriebsteilen ist damit eine Übertragungskette geschaffen, die im Vergleich zu den relativ ausladenden Elementen beim Stand der Technik platzsparend ist.

In bevorzugter Ausführungsform greift das Stellende des Linearantriebes an dem Umschlaghebel etwa mittig an, so dass eine Übersetzung des Hubes des Linearantriebes bezogen auf das freie Ende des Umschlaghebels erfolgt. An diesem freien Ende ist zur Bewegungsübertragung die Antriebskoppel vorgesehen, die so an dem Dachlenker angreift, dass dieser von einer Verdeckschließposition in eine Verdecköffnungsposition und umgekehrt verschwenkt werden kann. Die Hubübersetzung durch den in das Verdeckhauptlager integrierten Umschlaghebel erlaubt eine relativ kurze Ausbildung des Linearantriebes bei relativ großen auf dem Dachlenker übertragenen Huben. Der Dachlenker weist an seinem dem Hauptlager zugewandten Ende eine im wesentlichen einen Kniebereich bildende Form auf, wobei die Antriebskoppel im Kniebereich des Dachlenkers drehbeweglich gelagert ist.

Die Ansprüche 7 bis 14 stellen in allen Bewegungsphasen des Verdecks eine sichere Krafteinleitung, eine kompakte Ausbildung der Antriebselemente und eine definierte Stellung der Antriebselemente in unterschiedlichen Öffnungs- und Schließphasen sicher.

Die Erfindung ist anhand von Ausführungsbeispielen in den Zeichnungsfiguren näher erläutert. Diese zeigen
- Fig. 1: die wesentlichen Elemente eines Verdeckantriebes mit dadurch bewegten Dachlenkern in einer ersten, einer Dachschließstellung entsprechenden Position;
- Fig. 2: die Elemente gern. Fig. 1 in einer zweiten, einer halben Dachöffnung entsprechenden Position;
- Fig. 3: die Elemente gern. Fig. 1 und 2 in einer Dachöffnungsstellung entsprechenden Position.

Der Verdeckantrieb 1 und das nicht weiter dargestellte, durch den Verdeckantrieb 1 bewegte Fahrzeugdach umfassen einen Linearantrieb 2, einen durch den Linearantrieb 2 bewegten Dachlenker 3, ein Verdeckhauptlager 4, an dem das Festende 5 des Dachlenkers 3 und das Festende 6 des Linearantriebes 2 befestigt sind. Ferner ist ein am Verdeckhauptlager 4 schwenkbar befestigter Umschlaghebel 7 vorgesehen, an dessen freien Ende 8 eine Antriebskoppel 9 angeordnet ist, die mit einem ersten Ende 10 am freien Ende 8 des Umschlaghebels 7 befestigt ist und mit einem zweiten Ende 11 an dem Dachlenker 3 angreift. Der Linearantrieb 2 weist beim dargestellten Ausführungsbeispiel eine linear verschiebbare Stange 12, beispielsweise eine Kolbenstange auf, deren freies Stellende 13 etwa mittig am Umschlaghebel 7 angreift und dadurch in etwa zu einer Bewegungsverdoppelung bezogen auf das freie Ende 8 des Umschlaghebels 7 führt. Der vom Linearantrieb 2 und vom Umschlaghebel 7 benötigte Bewegungsraum ist dadurch begrenzt.

Keines der Antriebselemente Linearantrieb 2, Umschlaghebel 7 und Antriebskoppel 9 stehen in irgendeiner Bewegungsphase des Verdeckantriebes 1 im wesentlichen über eine obere Außenkontur 14 des Verdeckhauptlagers 4 hinaus, die in Zeichnungsfigur 1 gestrichelt dargestellt ist. Die gestrichelte Außenkontur 14 folgt einerseits den Oberkanten des Verdeckhauptlagers 4, andererseits verläuft es zwischen dem Lagerpunkt am Festende des Dachlenkers 3 und dem Lagerpunkt am Festende des Stützlenkers 19.

Der Dachlenker 3 weist an seinem dem Verdeckhauptlager 4 zugewandten Ende eine im wesentlichen einen Kniebereich 15 bildende Form auf, wobei die Antriebskoppel 9 im Kniebereich 15 des Dachlenkers 3 an diesem drehbeweglich gelagert ist und die beiden an dem Kniebereich 15 angrenzenden Schenkel 16, 17 einen spitzen Winkel einschließen.

Die Längsachse 18 des Linearantriebes 2 verlaufen in keiner Bewegungsphase des Verdeckantriebes 1 parallel zueinander, vielmehr schließen beide Elemente in allen Bewegungsphasen einen spitzen Winkel ein. Der Umschlaghebel 7 durchläuft während der Bewegungsphase des Verdeckantriebes 1 im wesentlichen einen Winkelbereich von weniger als 90°.

Das Fahrzeugverdeck ist neben dem Dachlenker 3 zusätzlich noch durch einen Stützlenker 19 an dem Verdeckhauptlager 4 gelagert, der Verdeckantrieb 1 greift allerdings ausschließlich an dem Dachlenker 3 an und bewegt über diesen alle anderen Dachteile zwangsgesteuert.

Umschlaghebel 7, Antriebskoppel 9, Linearantrieb 2, der Dachlenker 3 und der Stützlenker 19 bilden mit dem Verdeckhauptlager 4 eine zusammenhängend in eine Fahrzeugkarosserie montierbare Baueinheit. Da an dem Dachlenker 3 und dem Stützlenker 19 weitere Dachteile befestigt bzw. vormontiert sind, kann das gesamte Fahrzeugdach einschließlich des motorischen Antriebes auf einfache Weise in eine Fahrzeugkarosserie eingebaut werden.

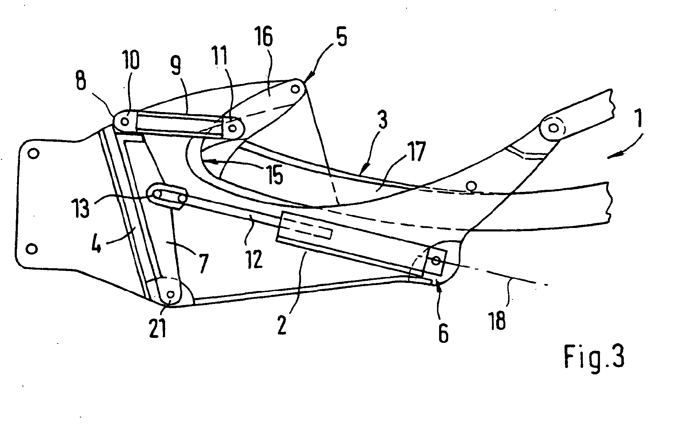

Das Verdeckhauptlager 4 ist im wesentlichen u-förmig ausgebildet, in den Innenbereich taucht in Verdeckablageposition gern. Fig. 3 der Kniebereich 15 des Dachlenkers 3 zumindest bereichsweise ein.

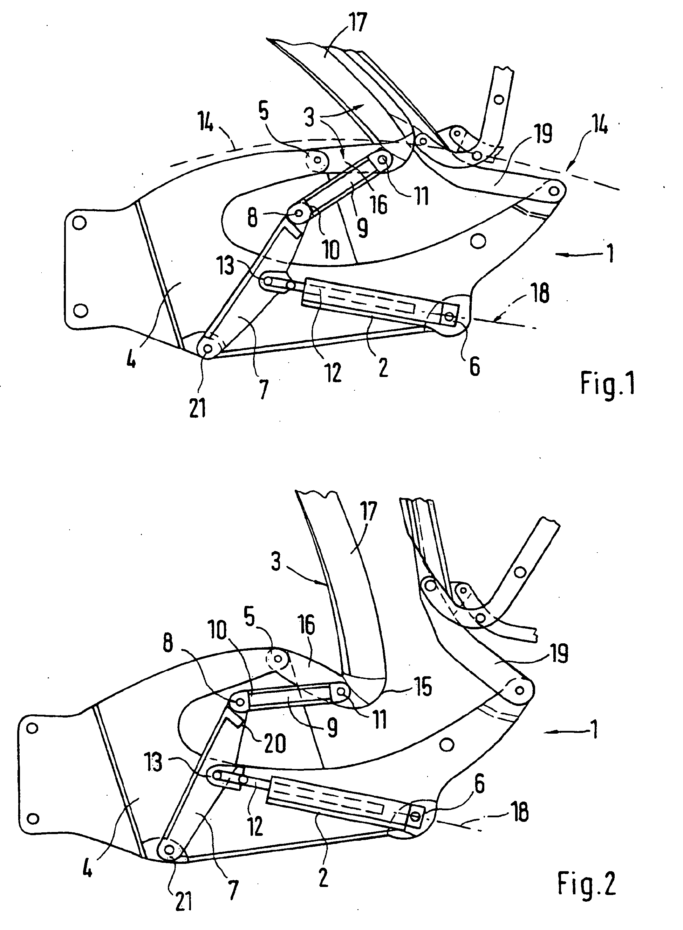

Aus den Zeichnungsfiguren 1 bis 3 ist noch ersichtlich, dass der Umschlaghebel 7 einen Anschlag 20 aufweist, der in Verdeckablageposition gemäß Fig. 3 die Antriebskoppel 9 beaufschlagt und abstützt. Aus Figur 1 ist außerdem ersichtlich, dass der Umschlaghebel 7 mit der Antriebskoppel 9 in Verdeckschließposition eine im wesentlichen gestreckte Stützstellung einnimmt, wodurch über den Dachlenker 3 eingeleitete Kräfte direkt am Schwenklager 21 zwischen Umschlaghebel 7 und Verdeckhauptlager 4 abgestützt werden.

### Bezugszeichenliste

1 Verdeckantrieb
2 Linearantrieb
3 Dachlenker
4 Verdeckhauptlager
5 Festende von 3
6 Festende von 2
7 Umschlaghebel
8 freies Ende von 7
9 Antriebskoppel
10 erstes Ende von 9
11 zweites Ende
12 Stange von 2
13 Stellende von 2
14 Außenkontur
15 Kniebereich von 3
16 Schenkel von 3
17 Schenkel von 3
18 Längsachse
19 Stützlenker
20 Anschlag
21 Schwenklager

## Patentansprüche

1. Verdeckantrieb (1) für ein von einer Schließposition in eine Ablageposition und umgekehrt überführbares flexibles Fahrzeugdach, mit wenigstens einem über einen Linearantrieb (2) bewegbaren Dachlenker (3), wobei der Dachlenker (3), ein Stützlenker (19) und ein Festende (6) des Linearantriebes (2) an einem Verdeckhauptlager (4) befestigt sind, wobei ein Stellende (12) des Linearantriebes (2) schwenkbar an einem am Verdeckhauptlager (4) befestigten Umschlaghebel (7) befestigt ist, an dessen freien Ende (8) eine Antriebskoppel (9) angeordnet ist, die mit einem ersten Ende (10) gelenkig mit dem freien Ende (8) des Umschlaghebels (7) und mit einem zweiten Ende (11) gelenkig mit einem vom Drehpunkt am Verdeckhauptlager (4) beabstandeten Abschnitt des Dachlenkers (3) befestigt ist, wodurch eine Antriebsbewegung des Linearantriebs (2) auf den Dachlenker (3) übertragbar ist, **dadurch gekennzeichnet, dass** keines der Verdeckantriebselemente, nämlich Linearantrieb (2), Umschlaghebel (7) und Antriebskoppel (9) in einer Bewegungsphase des Verdeckantriebs (1) über eine obere Außenkontur (14) des Verdeckhauptlagers (4) hinaussteht, wobei die obere Außenkontur (14) einerseits den Oberkanten des Verdeckhauptlagers (4) folgt und andererseits zwischen einem Lagerpunkt eines Festendes des Dachlenkers (3) und einem Lagerpunkt eines Festendes des Stützlenkers (19) verläuft.

2. Verdeckantrieb nach Anspruch 1, **dadurch gekennzeichnet, dass** das Stellende (13) des Linearantriebs (2) an dem Umschlaghebel (7) etwa mittig angreift.

3. Verdeckantrieb nach einem der Ansprüche 1 oder 2, **dadurch gekennzeichnet, dass** der Dachlenker (3) an seinem dem Verdeckhauptlager (4) zugewandten Ende eine im wesentlichen einen Kniebereich (15) bildende Form aufweist.

4. Verdeckantrieb nach einem der vorhergehenden Ansprüche, **dadurch gekennzeichnet, dass** die Antriebskoppel (9) im Kniebereich (15) des Dachlenkers (3) an diesem drehbeweglich gelagert ist und die beiden an den Kniebereich (15) angrenzenden Schenkel (16, 17) des Dachlenkers (3) einen spitzen Winkel einschließen.

5. Verdeckantrieb nach einem der Ansprüche 3 oder 4, **dadurch gekennzeichnet, dass** die Antriebskoppel (9) zwischen dem Kniebereich (15) des Dachlenkers (3) und dem schwenkbeweglich am Verdeckhauptlager (4) angeordneten Schenkelende angreift.

6. Verdeckantrieb nach einem der vorhergehenden Ansprüche, **dadurch gekennzeichnet, dass** die Längsachse des Linearantriebs (2) und die Längsachse der Antriebskoppel (9) in keiner Bewegungsphase des Verdeckantriebes (1) parallel zueinander verlaufen.

7. Verdeckantrieb nach einem der vorhergehenden Ansprüche, **dadurch gekennzeichnet, dass** die Längsachse (18) des Linearantriebes (2) und die wesentliche Längserstreckungsrichtung des vom Kniebereich (15) zu den Dachsegmenten verlaufende Schenkel (17) des Dachlenkers (3) im wesentlichen parallel zueinander angeordnet sind.

8. Verdeckantrieb nach einem der vorhergehenden Ansprüche, **dadurch gekennzeichnet, dass** der Umschlaghebel (7) während der Bewegungsphasen des Verdeckantriebes (1) im wesentlichen einen Winkelbereich von weniger als 90° durchläuft.

9. Verdeckantrieb nach einem der vorhergehenden Ansprüche, **dadurch gekennzeichnet, dass** das Fahrzeugverdeck über den Dachlenker (3) und einen Stützlenker (19) an dem Verdeckhauptlager (4) gelagert ist und der Verdeckantrieb (1) ausschließlich an dem Dachlenker (3) angreift.

10. Verdeckantrieb nach einem der vorhergehenden Ansprüche, **dadurch gekennzeichnet, dass** der Umschlaghebel (7), die Antriebskoppel (9), der Linearantrieb (2), der Dachlenker (3) und/oder der Stützlenker (19) mit dem Verdeckhauptlager (4) eine zusammenhängend in eine Fahrzeugkarosserie montierbare Baueinheit bilden.

11. Verdeckantrieb nach einem der vorhergehenden Ansprüche, **dadurch gekennzeichnet, dass** das Verdeckhauptlager (4) eine im wesentlichen u-förmige Öffnung aufweist in deren Innenbereich in Verdeckablageposition zumindest teilweise der Kniebereich (15) des Dachlenkers (3) eintaucht.

12. Verdeckantrieb nach einem der vorhergehenden Ansprüche, **dadurch gekennzeichnet, dass** der Umschlaghebel (7) einen Anschlag (20) aufweist, der in Verdeckablageposition die Antriebskoppel (9) beaufschlagt.

13. Verdeckantrieb nach einem der vorhergehenden Ansprüche, **dadurch gekennzeichnet, dass** der Umschlaghebel (7) mit der Antriebskoppel (9) in Verdeckschließposition eine im wesentlichen gestreckte Stellung einnimmt.

## Claims

1. Top drive (1) for a flexible vehicle roof which can be transferred from a closed position into a storage position and vice versa, with at least one roof link (3) which is movable via a linear drive (2), the roof link (3), a supporting link (19) and a fixed end (6) of the linear drive (2) being fastened to a main bearing (4) of the top, an actuating end (12) of the linear drive (2) being fastened pivotably to a throw-over lever (7) which is fastened to the main bearing (4) of the top and at the free end (8) of which there is arranged a drive connecting rod (9) which is fastened at a first end (10) in an articulated manner to the free end (8) of the throw-over lever (7) and at a second end (11) in an articulated manner to a section of the roof link (3), which section is spaced apart from the pivot point on the main bearing (4) of the top, as a result of which a driving movement of the linear drive (2) can be transmitted to the roof link (3), **characterized in that** none of the driving elements of the top, namely linear drive (2), throw-over lever (7) and drive connecting rod (9), protrudes beyond an upper outer contour (14) of the main bearing (4) of the top in a movement phase of the top drive (1), the upper outer contour (14), firstly, following the upper edges of the main bearing (4) of the top and, secondly, running between a bearing point of a fixed end of the roof link (3) and a bearing point of a fixed end of the supporting link (19).

2. Top drive according to Claim 1, **characterized in that** the actuating end (13) of the linear drive (2) acts approximately centrally on the throw-over lever (7).

3. Top drive according to either of Claims 1 and 2, **characterized in that** the roof link (3), at its end facing the main bearing (4) of the top, has a shape which essentially forms a knee region (15).

4. Top drive according to one of the preceding claims, **characterized in that** the drive connecting rod (9) is mounted rotatably on the roof link (3) in the knee region (15) of the latter, and the two limbs (16, 17) of the roof link (3), which limbs are adjacent to the knee region (15), enclose an acute angle.

5. Top drive according to either of Claims 3 and 4, **characterized in that** the drive connecting rod (9) acts between the knee region (15) of the roof link (3) and the limb end arranged pivotably on the main bearing (4) of the top.

6. Top drive according to one of the preceding claims, **characterized in that** the longitudinal axis of the linear drive (2) and the longitudinal axis of the drive connecting rod (9) do not run parallel to each other in any movement phase of the top drive (1).

7. Top drive according to one of the preceding claims, **characterized in that** the longitudinal axis (18) of the linear drive (2) and the substantial direction of longitudinal extent of that limb (17) of the roof link (3) which runs from the knee region (15) to the roof segments are arranged essentially parallel to each other.

8. Top drive according to one of the preceding claims, **characterized in that** the throw-over lever (7) passes essentially through an angular range of less than 90° during the movement phases of the top drive (1).

9. Top drive according to one of the preceding claims, **characterized in that** the vehicle top is mounted on the main bearing (4) of the top via the roof link (3) and a supporting link (19), and the top drive (1) acts exclusively on the roof link (3).

10. Top drive according to one of the preceding claims, **characterized in that** the throw-over lever (7), the drive connecting rod (9), the linear drive (2), the roof link (3) and/or the supporting link (19) together with the main bearing (4) of the top from a constructional unit which can be fitted connected together into a vehicle body.

11. Top drive according to one of the preceding claims, **characterized in that** the main bearing (4) of the top has an essentially U-shaped opening, into the inner region of which at least part of the knee region (15) of the roof link (3) dips in the storage position of the top.

12. Top drive according to one of the preceding claims, **characterized in that** the throw-over lever (7) has a stop (20) which acts upon the drive connecting rod (9) in the storage position of the top.

13. Top drive according to one of the preceding claims, **characterized in that** the throw-over lever (7) takes up an essentially extended position together with the drive connecting rod (9) in the closed position of the top.

## Revendications

1. Entraînement de capote (1) pour un toit de véhicule flexible pouvant être déplacé d'une position de fermeture dans une position de rangement et inversement, comprenant au moins un bras oscillant de toit (3) déplaçable par le biais d'un entraînement linéaire (2), le bras oscillant de toit (3), un bras oscillant de support (19) et une extrémité fixe (6) de l'entraînement linéaire (2) étant fixés sur un support principal de capote (4), une extrémité de réglage (12) de l'entraînement linéaire (2) étant fixée de manière pivotante à un levier de retournement (7) fixé au support principal de capote (4), à l'extrémité libre (8) duquel est disposée une bielle d'entraînement (9) qui est fixée par une première extrémité (10) de manière articulée à l'extrémité libre (8) du levier de retournement (7) et par une deuxième extrémité (11) de manière articulée à une portion du bras oscillant de toit (3) espacée du centre sur le support principal de capote (4), de sorte qu'un mouvement d'entraînement de l'entraînement linéaire (2) puisse être transmis au bras oscillant de toit (3), **caractérisé en ce qu'**aucun des éléments d'entraînement de capote, à savoir l'entraînement linéaire (2), le levier de retournement (7) et la bielle d'entraînement (9) ne fait saillie dans une phase de déplacement de l'entraînement de capote (1) au-delà d'un contour extérieur supérieur (14) du support principal de capote (4), le contour extérieur supérieur (14) d'une part suivant les arêtes supérieures du support principal de capote (4) et d'autre part s'étendant entre un point de support d'une extrémité fixe du bras oscillant de toit (3) et un point de support d'une extrémité fixe du bras oscillant de support (19).

2. Entraînement de capote selon la revendication 1, **caractérisé en ce que** l'extrémité de réglage (13) de l'entraînement linéaire (2) vient en prise approximativement centralement sur le levier de retournement (7).

3. Entraînement de capote selon l'une quelconque des revendications 1 ou 2, **caractérisé en ce que** le bras oscillant de toit (3) présente, à son extrémité tournée vers le support principal de capote (4), une forme formant essentiellement une région de genouillère (15).

4. Entraînement de capote selon l'une quelconque des revendications précédentes, **caractérisé en ce que** la bielle d'entraînement (9) est montée de manière rotative sur le bras oscillant de toit (3) dans la région de genouillère (15) de ce dernier et les deux branches (16, 17) du bras oscillant de toit (3) adjacentes à la région de genouillère (15) forment un angle aigu.

5. Entraînement de capote selon l'une quelconque des revendications 3 ou 4, **caractérisé en ce que** la bielle d'entraînement (9) vient en prise entre la région de genouillère (15) du bras oscillant de toit (3) et l'extrémité de branche disposée de manière pivotante sur le support principal de capote (4).

6. Entraînement de capote selon l'une quelconque des revendications précédentes, **caractérisé en ce que** l'axe longitudinal de l'entraînement linéaire (2) et l'axe longitudinal de la bielle d'entraînement (9) ne s'étendent parallèlement l'un à l'autre dans aucune phase de déplacement de l'entraînement de capote (1).

7. Entraînement de capote selon l'une quelconque des revendications précédentes, **caractérisé en ce que** l'axe longitudinal (18) de l'entraînement linéaire (2) et la direction d'étendue longitudinale principale de la branche (17) du bras oscillant de toit (3) s'étendant depuis la région de genouillère (15) jusqu'aux segments de toit sont disposés essentiellement parallèlement l'un à l'autre.

8. Entraînement de capote selon l'une quelconque des revendications précédentes, **caractérisé en ce que** le levier de retournement (7), pendant les phases de déplacement de l'entraînement de capote (1), parcourt essentiellement une plage angulaire inférieure à 90°.

9. Entraînement de capote selon l'une quelconque des revendications précédentes, **caractérisé en ce que** la capote du véhicule est montée par le biais du bras oscillant de toit (3) et d'un bras oscillant de support (19) sur le support principal de capote (4) et l'entraînement de capote (1) vient en prise exclusivement sur le bras oscillant de toit (3).

10. Entraînement de capote selon l'une quelconque des revendications précédentes, **caractérisé en ce que** le levier de retournement (7), la bielle d'entraînement (9), l'entraînement linéaire (2), le bras oscillant de toit (3) et/ou le bras oscillant de support (19) forment avec le support principal de capote (4) une unité structurelle pouvant être montée de manière à être rattachée à une carrosserie de véhicule.

11. Entraînement de capote selon l'une quelconque des revendications précédentes, **caractérisé en ce que** le support principal de capote (4) présente une ouverture essentiellement en forme de U dans la région intérieure de laquelle, dans la position de rangement de la capote, la région de genouillère (15) du bras oscillant de toit (3) plonge au moins en partie.

12. Entraînement de capote selon l'une quelconque des revendications précédentes, **caractérisé en ce que** le levier de retournement (7) présente une butée (20) qui sollicite la bielle d'entraînement (9) dans la position de rangement de la capote.

13. Entraînement de capote selon l'une quelconque des revendications précédentes, **caractérisé en ce que** le levier de retournement (7) adopte, avec la bielle d'entraînement (9), dans la position de fermeture de la capote, une position essentiellement étirée.
